(19) Europäisches Patentamt
European Patent Office
Office européen des brevets

(11) **EP 3 669 959 A1**

(12) **EUROPEAN PATENT APPLICATION**

(43) Date of publication:
**24.06.2020 Bulletin 2020/26**

(51) Int Cl.:
**B01D 17/02** (2006.01)          **B01D 17/06** (2006.01)
**B04C 5/04** (2006.01)          **B04C 5/103** (2006.01)
**B04C 5/107** (2006.01)

(21) Application number: **18306793.3**

(22) Date of filing: **21.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **SUEZ Eau Industrielle**
  **92040 Paris La Défense Cedex (FR)**
• **IFP Energies nouvelles**
  **92500 Rueil-Malmaison (FR)**

(72) Inventors:
• SAGNE, Camille
  **92130 ISSY LES MOULINEAUX (FR)**
• JERMANN, Cyril
  **69001 LYON (FR)**
• DARBOURET, Myriam
  **42420 LORETTE (FR)**
• GRAHAM, Barry
  **Dorset DT4 7SL (GB)**

(74) Representative: **IPAZ**
  **16, rue Gaillon**
  **75002 Paris (FR)**

(54) **HYDROCYCLONE AND ITS USE IN SEPARATION OF FLUIDIC PHASES**

(57)    The invention concerns a hydrocylone (1) for separating at least a light phase and a heavy phase of a solution comprising at least one polymer or a drag reducing agent, said hydrocyclone comprising : a cylindrical chamber (10) with a tangential inlet (13), an underflow outlet (15) and an overflow outlet (16), wherein it comprises turbulence inducing means for inducing turbulences at least in said hydrocyclone and into at least a portion of the heavy phase.

The inevntion also concerns a method for separating two fluidic phases of a solution comprising at least one polymer, said method being performed in the hydrocyclone (1).

Fig. 1

## Description

## FIELD OF THE INVENTION

The invention relates to the field of water treatment, especially to the separation of a dispersed organic phase from an aqueous phase for example. In particular, the invention relates to an improved hydrocyclone compliant with Enhanced Oil Recovery (EOR) chemicals and, in more general terms, compliant with any Drag Reducing Agents (DRA) present in the solution to be treated.

The invention also concerns a method for separating two fluidic phases of a solution comprising at least one polymer such as EOR chemicals, or drag reducing agents.

## TECHNICAL BACKGROUND

Until recently, exploitation of a so-called conventional oil field commonly proceeded in two stages: a first stage of primary recovery based purely on the increased pressure present in the reservoir, followed by a second stage generally using waterflooding.

This method consists of injecting water into the underground formation in order to compensate the pressure drop in the reservoir, and therefore remobilize the oil in situ. This water, as well as the water may be present initially in the underground formation, will be present in the petroleum effluents. It is therefore necessary to treat these petroleum effluents so that only the hydrocarbons are recovered. The first step in the treatment of the petroleum effluents generally may consist of separating the water and the oil by gravity (for example by a "free water KnockOut" method). Moreover, the water separated from the oil is not completely clean (the gravity separation process is not perfect): notably it contains oil droplets and impurities. To remove these impurities and the oil droplets, the water is sent to water treatment operations, notably de-oiling operations. At the end of the water treatment operations, the water quality must be sufficient to meet the legal norms or must be suitable for reinjection into the underground formation.

Currently, petroleum engineers aim to optimize recovery of the hydrocarbons. This can be achieved by decreasing the residual oil saturation obtained at the waterflooding operation, which on average is 65% for the reservoirs that are preferentially wettable with water. To meet this objective, new techniques have been developed, called chemical tertiary recovery (or Chemical Enhance Oil Recovery, cEOR).

These processes are based on the addition of additives to the water injected for waterflooding, such as polymers, surfactants, drag reducing agents, alkalis or a combination of these additives. Now, after percolation of this solution to the producing well, it has been demonstrated that the properties of the effluent produced at the wellhead are modified by the additives (polymers, surfactants, and/or alkalis).

In the domain of exploitation of underground formation, another methods have been developed, in order to improve oil production, for example Drag Reducing Agents are also injected in production lines in order to decrease the pressure drop generating by the flow.

When extracting oil using these techniques, the recovered oil-water mixture must be treated. Such treatment processes aim first at separating the oil from the water. Such treatment processes also aim at treating the produced water before being disposed of, and/or before reinjection into the injection well as injection water. Different oil-water mixture treatment techniques have been developed for recovering and treating oil-water mixtures and produced water obtained from it.

A first solution known consists in using chemical additives like coalescing agents or demulsifiers to increase the oil droplet size in presence of polymer or surfactant in order to improve the separation step of the water treatment. However, the chemical additives may require specific water treatment or may generate other water-oil separation issues.

The use of cumbersome tanks with high retention time has also been proposed but it is not cost effective (Zheng, F., Quiroga, P., Sams, G. W., & Cameron. (2011). Challenges in Processing Produced Emulsion From Chemical Enhanced Oil Recovery - Polymer Flood Using Polyacrylamide. Spe Enhanced Oil Recovery Conference [Eorc] (Kuala Lumpur, Malaysia, 7/19-21/2011) Proceedings, 201149).

In the water treatment process, the separation step can be performed with a hydrocyclone. Some results showed that the presence of polymers used in enhanced oil recovery impacts the performance of hydrocyclones significantly (*Zheng et al. 2011; Wand et al.* 1999). These results are consistent with the literature (MacKenzie 2014; Wand et al. 1999) which states that the addition of drag reducing polymer additives fundamentally changes the hydrocyclone flow field.

A second or multiple hydrocyclones in series can be used as a pre-coalescer device. However, adding a secondary or multiple hydrocyclones in series may increase the cost of water treatment and leads to a higher pressure loss which may be challenging for process control.

The use of a hydrocyclone with a specific inlet volute shape has been proposed to increase/optimize the centrifugal force in order to enhance the separation in presence of polymer (increasing the radial pressure gradient). But, no evidence of the efficiency in presence of polymers was shown. Indeed, no publications or patents mention an optimal inlet volute geometry that would solve the separation problems due to the drag reduction effect of the polymer. (see. Noroozi, S., & Hashemabadi, S. H. (2009). CFD simulation of inlet design effect on deoiling hydrocyclone separation efficiency. Chemical Engineering and Technology, 32(12), 1885-1893.)

Another solution is the use of dynamic hydrocyclone geometry to deal with higher viscosity solutions.

However the ever changing nature of the solution to be treated makes the viscosity hard to predict. This proposal involves the use of an engine that may make maintenance more challenging. (see : Wang, Z., L. Zhao, F. Li, J. He, L. C. (1999). Characteristics Study of Hydrocyclone Used for Separating Polymer-Flood Produced-Water. International Offshore and Polar Engineering Conference, I).

It appears that the use of the EOR chemicals and any Drag reducing Agents causes problems in the water treatment recovery. Numerous field experiences have shown that the presence of polymer like partially hydrolyzed polyacrylamide (HPAM) in produced water negatively impacts its treatment.

Even if polymers are injected in large concentrations for EOR applications, the experiments performed on hydrocyclone test rig have shown that the separation loss is strongly due to a drag reduction effect of the polymer. In particular, it was observed that the addition of a small amount of polymer drastically decreases the efficiency rate of the liner even if the viscosity of the aqueous phase is only slightly affected. In the case of larger amounts of polymers, the efficiency is decreased in the same order of magnitude.

Overall, effective produced water treatment is challenging but crucial for polymer flooding and current technology is not adequate.

## SUMMARY OF THE INVENTION

Consequently, the aim of the invention is to provide a hydrocyclone that ensures a good phase separation even in presence of polymer chemicals or DRA, like EOR polymer, for example polyacrylamide polymer. Another aim is to provide a method that ensures water-oil separation in presence of DRA within a hydrocyclone.

To this aim, the invention provides a hydrocyclone for separating at least a light phase and a heavy phase of a solution comprising at least one polymer or a drag reducing agent, said hydrocyclone comprising :

- a cylindrical chamber with a tangential inlet,

- an underflow outlet and an overflow outlet,

wherein it comprises turbulence inducing means for inducing turbulences at least in said hydrocyclone and into at least a portion of the heavy phase.

Advantageously, the hydrocyclone according the invention can separate a dispersed organic phase from an aqueous phase comprising polymer like Enhanced Oil Recovery (EOR) chemicals and, in more general terms, Drag Reducing Agents (DRA).

The hydrocyclone comprises at least a cylindrical chamber having optionally a conical section.

Advantageously, it appears that the turbulence inducing means act on the friction to the wall, through counteracting the DRA effect of the polymer in order to obtain a better oil-water separation rate in presence of EOR chemical or drag reducing agents.

The DRA effect consists mainly in a modification of the turbulent boundary layer, especially in the log-law region. The polymer chains are likely to stretch mainly in the near-wall region of the flow. The polymer chains directly interact with and dampen the quasi-streamwise vortices near the wall. As a consequence of these vortices suppression, the self-sustaining cycle of the wall turbulence is disrupted, the turbulent boundary layer is modified in the log-law region and converge to the Virk's asymptote. The turbulent skin friction drag is therefore reduced.

The unexpected effect due to the polymer presence is overcome with enhancing the friction to the wall by the turbulence generating means in the hydrocyclone. The increase of the effective surface friction restores the required hydrodynamics for hydrocyclone separation.

Preferably, the hydrocyclone according to the invention comprises turbulence inducing means that trigger turbulences in a boundary layer of the heavy phase. Preferably, the heavy phase is stirred locally by these turbulence inducing means.

By creating turbulences locally in the heavy phase, the turbulence inducing means act on the turbulent boundary layer profile; and avoid the DRA effect in order to obtain a better oil-water separation rate in presence of EOR chemical or drag reducing agents.

According to a first embodiment of the invention, the turbulence inducing means are mechanical means provided in the hydrocyclone, preferably provided in the inner face of the hydrocyclone wall.

These mechanical turbulence generating means comprise a textured surface or at least one protrusion.

The textured surface or protrusions are of various possible shape like pins, waves, triangular shape, slots, cavities, etc., realized on the inner surfaces.

Preferably, the mechanical turbulence generating means are provided in the cylindrical chamber and preferably in the conical section of that chamber.

Preferably, the mechanical turbulence generating means are provided in the conical section of the cylindrical chamber and in the conical section of the hydrocyclone leading to the underflow outlet.

Preferably, the height of the protrusion or of the textured surface is in the range of [1 $\mu$m-10mm],
Preferably, the depth of the protrusion or of the textured surface is in the range of [1 $\mu$m-10mm],
Preferably the width of the protrusion or of the textured surface is in the range of [1 $\mu$m-10mm]
Preferably the spacing between at least two protrusions or two textured surfaces or one protrusion and one textured surface along the sidewall is in the range [1 $\mu$m-100mm] in order to create a varying or not pattern of roughness.

The textured surface can also provide a roughness gradient in the hydrocyclone that may be uniform, non-uniform or varying along hydrocyclone axis.

In another embodiment, the mechanical means comprise a set of passive and/or active obstacles called "turbulators", said "turbulators" being arranged in a pattern. These turbulators' effect is to control the turbulent boundary layer (TBL). In particular they reinforce the TBL (i.e. to act on the log-law region) by creating an instability using well-designed and well-placed obstacles (inspired by aerodynamic control) to reset/trigger the self-sustaining cycle of the wall turbulence.

These mechanical turbulence generating means called "turbulators" can comprise at least a protrusion.

The mechanical turbulence generating means comprise at least an insert preferably located in the hydrocyclone volute and/or if applicable on the tapered section part of the hydrocyclone. In another embodiment, the turbulence generation means may comprise an ultrasonic device or means to generate air/water jet, pulsed jet. These means generate turbulences like instabilities/perturbations/disturbances within the boundary layer to trigger near-wall turbulence mechanism in order to increase the wall friction. These means generate turbulences to stir the heavy phase at the hydrocyclone wall interface.

The hydrocyclone according to the invention facilitates the water treatment process, reduces the cost of the equipment and is more effective and less expensive to implement and requires less maintenance.

The invention also concerns a method for separating two fluidic phases of a solution comprising at least one polymer, in a hydrocyclone, which separates the light phase and the heavy phase, wherein turbulences are induced at least in said hydrocyclone and into at least a portion of the heavy phase.

In one embodiment, the method is implemented with a hydrocyclone according to any of the characteristics described above, or any of the combination of the characteristics described above.

Preferably, the heavy phase of the treated solution is locally stirred by triggering turbulences in a boundary layer of the heavy phase.

Advantageously, it appears that this method counteracts the DRA effect of the polymer in order to obtain a better oil-water separation rate in presence of EOR chemical or drag reducing agents.

According to the invention, turbulences are triggered by mechanical means, preferably located on an inner face of the hydrocyclone wall, said mechanical means inducing turbulences.

The mechanical means comprise at least a protrusion or a textured surface. They can comprise a set of passive and/or active obstacles arranged in a pattern.

In a variant, the mechanical means comprise at least an insert, preferably located in the hydrocyclone volute.

In another embodiment, the turbulences are triggered by an ultrasonic device or by air/water pulsed jet.

The two fluidic phases of said solution are advantageously liquid phases.

Advantageously, the method is able to separate oil from an oil/water solution comprising at least one polymer or a DRA, oil being in the light phase ; and water and polymer (or DRA) in the heavy phase.

In the case where the water/oil composition comprises a surfactant, the surfactant may be present in the water phase or in the oil phase at the outlet of the hydrocyclone.

The invention also provides a method for developing a subterranean formation, in which at least one fluid is injected into said subterranean formation, said injected fluid comprising at least one polymer, wherein the following steps are carried out:

a. said fluid comprising said polymer is injected into said subterranean formation ;

b. at least one fluid is recovered from said subterranean formation, the recovered fluid comprising oil, water and a part of said injected polymer; and

c. the oil and the water of the recovered fluid are separated by means of the method according to the invention.

In one embodiment, this method for developing a subterranean formation may be a Chemical Enhance Oil Recovery method with water treatment. For this embodiment, the polymer may be a cEOR polymer, like a polyacrylamide polymer, for example HPAM.

In the case where the injected fluid comprises a surfactant, the surfactant may be present in the recovered fluid, and in the water phase or in the oil phase at the outlet of the hydrocyclone.

## BRIEF DESCRIPTION OF THE DRAWINGS

The invention will be better understood and its various characteristics and advantages will emerge from the following description of a number of exemplary embodiments and its appended figures in which:

- figure 1 is a longitudinal cross-sectional view of a hydrocyclone according to an embodiment of the invention;
- figure 2A and figure 2B are respectively curves showing streamwise mean velocity U as a function of the distance from the wall y and U/U+ as a function of u.y/v
- figure 3A is a visualizations of near-wall vortex structures with DRA
- figure 3B is a visualization of near-wall vortex structures without DRA
- figure 4 is a schematic representation of an elongated axisymmetric cylinder reproducing the flow topology of an hydrocyclone of the state of the art ;

- figure 5 is a schematic view of an example of mechanical turbulence generating means according to an embodiment of the invention;
- figure 6 is a schematic view of the generation of perturbations to trigger turbulence mechanism near the wall
- figure 7 is a schematic longitudinal cross-sectional view of a hydrocyclone according to an other embodiment of the invention..

## DETAILED DESCRIPTION OF THE INVENTION

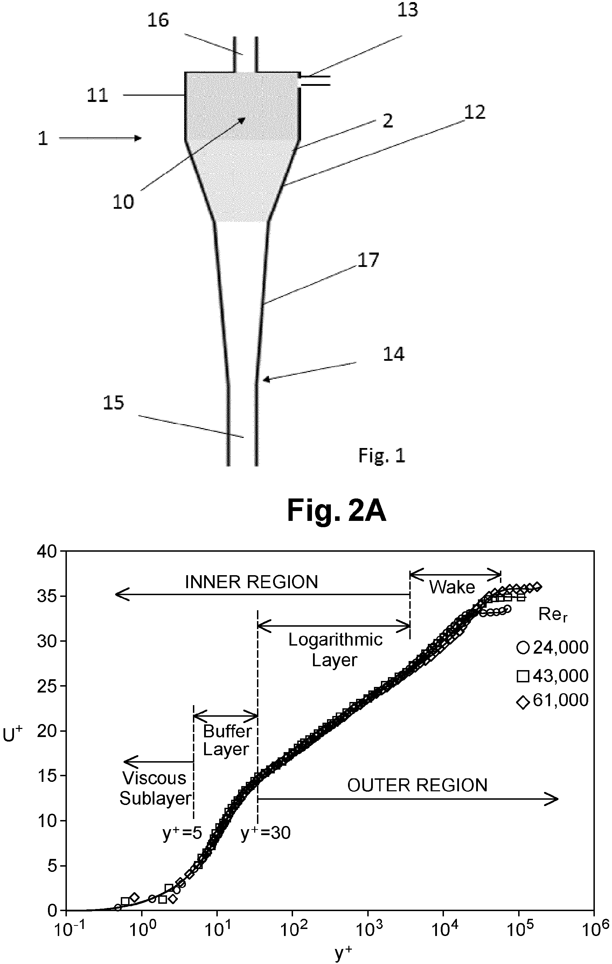

The figure 1 shows a schematic view of a hydrocyclone separator 1. This hydrocyclone 1 comprises a cylindrical chamber 10 comprising a head part 11 connected with a conically tapered separation part 12. An inlet conduit 13 is arranged to feed the solution to be treated into the cylindrical part head 11. This solution is fed tangentially in the cylindrical head part 11 through the inlet conduit 13, thus creating a whirling motion of the solution which follows a path of gradually decreasing radius toward the point of the narrowest radius of the conically tapered separation part 12 and apex 14. The conical section of the hydrocyclone comprises the conically tapered separation part 12 and a conical conduct 17.

It is well-known that hydrocyclones are pressure-driven separators that require a pressure drop across the unit to cause separation of the solids from the bulk phase (water, oil or gas, etc). The inlet stream enters the cyclone through a tangential inlet section 13 under pressure, where it is forced into a spiral motion by the cyclone's internal profile.

The internal cone shape 12 causes the spinning to accelerate, which generates high centrifugal forces, causing the heavy phase like denser solid particles to move to the outer wall 2 of the cyclone, while the light phase (Water/Oil/Gas) is displaced to the central core. The heavy phase or solids continue to spiral down along the outer wall 2 of the conical conduct 17 inside the cyclone 1 to the underflow outlet 15, where they exit. It is typical to collect the heavy phase like solids in a closed underflow container or vessel, and periodically dump these solids. The light phase will be collected by an overflow outlet 16 arranged axially through the top of the cylindrical head part 11.

As the spiral path approaches the apex 14 of the hydrocyclone 1, a portion of it turns and begins to flow towards the opposite end, i.e. towards the head part 11 and the overflow outlet 16. This portion is also in a spiral path of radius smaller than the radius of the first spiral path while rotating in the same direction. Thus a vortex is generated within the hydrocyclone.

The pressure will be lower along the central axis of the vortex and increase radially outwardly towards the outer wall 2 of the hydrocyclone 1. The hydrocyclone 1 will separate the heavy phase moving towards the wall 2 leaving the hydrocyclone through the underflow outlet 15. The light phase will move towards the central axis and travel upwardly leaving the hydrocyclone 1 through an overflow outlet 16.

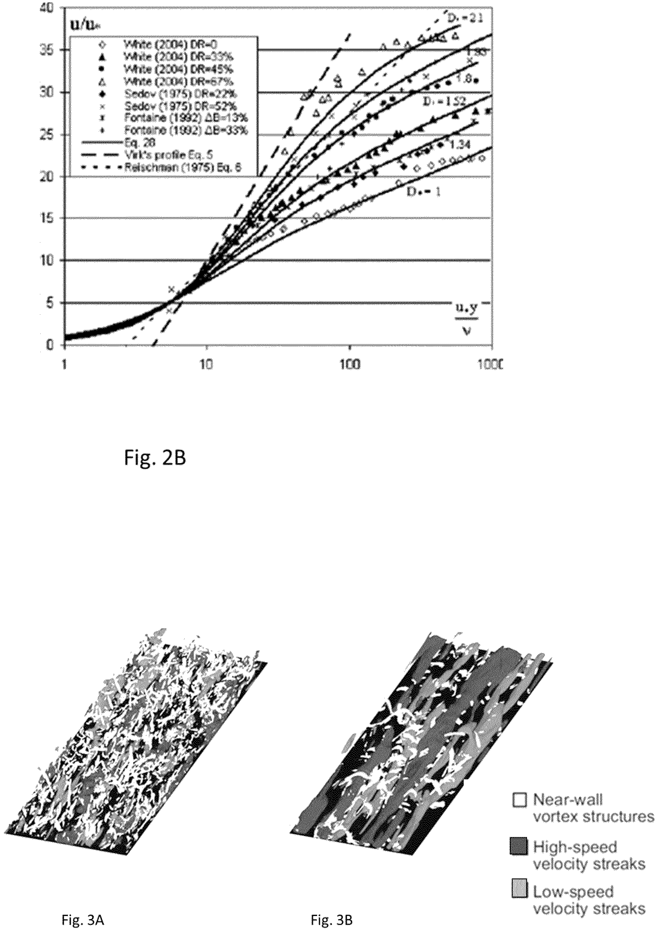

As previously described, the DRA effect consists mainly in a modification of the turbulent boundary layer (TBL), especially in the log-law region as it can be seen on figure 2A (streamwise mean velocity $U^+$ as a function of the distance from the wall y) and figure 2A ($U/U^+$ as a function of u.y/v) illustrating the TBL with and without DRA. The superscript + denotes the normalization of velocity and length and u and v are components of the velocity vector.

More precisely, the polymer chains stretch primarily in the near-wall region of the flow and they interact with dynamic vortex structures near the wall as it can be seen in the figure 3 illustrating instantaneous visualization of near-wall vortex structures identified using isosurface of the positive second invariant of the velocity Gradient tensor, high-speed velocity streaks and low-speed velocity streaks for a) Newtonian fluid and drag reduction of 60% b).

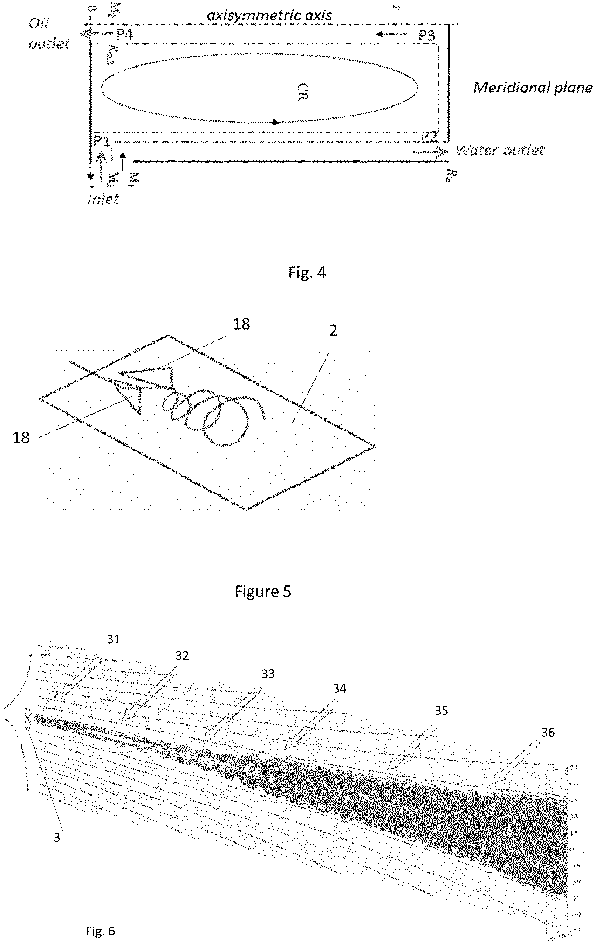

The swirls decay along the sidewall of the hydrocyclone is one of the driven forces of the reverse flow allowing the separation. The nature of the counterflow for an elongated axissymetric cylinder as it can be seen in the figure 4 is explained by solving mathematically the axisymmetric Navier-Stokes equations assuming that the swirl velocity is as follow:

$$v_\theta = F(r)\exp(-\lambda z)$$

with r being the radial coordinate, z being the axial coordinate and $\lambda$ a constant value corresponding to the decay rate in the axial direction

A distribution of pressure has been obtained as follow : P1 (inlet pressure) > P2 (underflow outlet) > P3 (core path) > P4 (overflow outlet) showing mathematically that the U-pattern throughflow required for classification and the global meridional circulation are due to a combined effect of centrifugal force and friction (swirl decay along the sidewall).

It appears that the polymer chains are likely to stretch mainly in the near-wall region of the flow. These polymer chains directly interact with and dampen the quasi-streamwise vortices near the wall. As a consequence of these vortices suppression, the self-sustaining cycle of the wall turbulence is disrupted, the turbulent boundary layer is modified in the log-law region and converge to the Virk's asymptote. Anyhow, the turbulent skin friction drag is reduced.

The axial and swirl velocity profiles are therefore affected by the change of turbulent boundary layer profile, and the streamwise gradient of swirl velocity near the wall tends to 0. The swirl decay assumption is no longer true, the internal pressure distribution that allows the formation of the reverse flow region may be no longer establish or only in a small area, resulting in a poor separation.

The unexpected effect due to the polymer presence is overcome with enhancing the friction to the wall by turbulence generating means provided in the hydrocyclone 1, for inducing turbulences at least in said hydrocyclone 1 and into at least a portion of the heavy phase.

The increase of the effective surface friction restores the required hydrodynamics for hydrocyclone separation, by acting on the friction to the wall 2.

Mechanical turbulence generating means according to an embodiment are illustrated by figure 5. In this example, the mechanical means are triangular protrusions 18 provided on the inner surface 2a of the circumferential wall 2.

The figure 6 proposes as turbulence generating means a pair of counter-rotating vortices 3 to induce an inflow perturbation 31, then primary rolls and streaks 32, followed by secondary instability 33 and then coherent structures 34, followed by breakdown to turbulence 35 generating turbulent flow in the sub-layer 36 (near the wall).

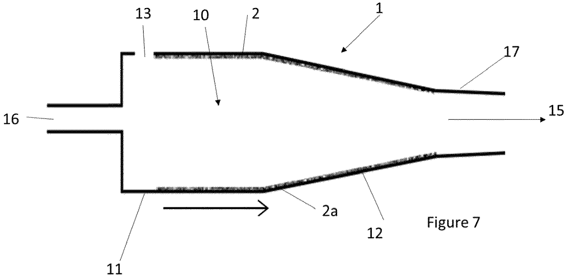

As another embodiment illustrated in figure 7, the inner surface 2a of the hydrocyclone 1 (with an inlet 13 and two outlets 15 and 16 as described in relation with the figure 1) comprises a textured surface to provide roughness on the inner surface 2a that may be uniform, non-uniform or varying along hydrocyclone axis.

## Claims

1. Hydrocylone (1) for separating at least a light phase and a heavy phase of a solution comprising at least one polymer or a drag reducing agent, said hydrocyclone comprising :

   - a cylindrical chamber (10) with a tangential inlet (13),
   - an underflow outlet (15) and an overflow outlet (16),

   wherein it comprises turbulence inducing means for inducing turbulences at least in said hydrocyclone and into at least a portion of the heavy phase.

2. The hydrocyclone (1) according to claim 1, wherein it comprises mechanical turbulence inducing means.

3. The hydrocyclone (1) according to claim 2, wherein mechanical turbulence inducing means are located on the inner face of the hydrocyclone wall (2).

4. The hydrocyclone (1) according to claim 3 wherein the mechanical turbulence generating means comprise at least a protrusion (18) or a textured surface.

5. The hydrocyclone (1) according to claim 1 wherein it comprises an ultrasonic device to induce turbulence in the heavy phase at the hydrocyclone wall (2) interface.

6. The hydrocyclone (1) according to claim 1 wherein it comprises means to generate air/water pulsed jet to stir the heavy phase at the hydrocyclone wall (2) interface.

7. The hydrocyclone (1) according to one of claims 1 to 4, wherein the turbulence inducing means are disposed in the volute part and /or on a conical section part (12) of the hydrocyclone.

8. Method for separating two fluidic phases of a solution comprising at least one polymer, said method being performed in a hydrocyclone (1) which separates the light phase and the heavy phase of the solution, wherein turbulences are induced at least in said hydrocyclone (1) and into at least a portion of the heavy phase.

9. The method according to claim 8, wherein the heavy phase is stirred by triggering turbulence in a boundary layer of the heavy phase.

10. The method according to claim 8 or 9, wherein turbulences are triggered by mechanical means, preferably located on an inner surface (2a) of the hydrocyclone wall (2), said mechanical means inducing turbulences.

11. The method according to claim 10, wherein the mechanical means comprise at least a protrusion (18) or a textured surface.

12. The method according to one of claim 8 to 10, wherein turbulence is triggered by ultrasonic device.

13. The method according to one of claim 8 to 10, wherein turbulence is triggered by air/water pulsed jet.

14. The method according to one of the 8 to 13, wherein the two fluidic phases of said solution are liquid phases.

15. The method according to one of the previous claims, wherein the method is able to separate oil from an oil/water solution comprising at least one polymer or a Drag Reducing Agent, oil being in the light phase ; and water and polymer or a Drag Reducing Agent in the heavy phase.

16. Method for developing a subterranean formation, in which at least one fluid is injected into said subterranean formation, said injected fluid comprising at least one polymer, **characterized in that** the following steps are carried out:

a. said fluid comprising said polymer is injected into said subterranean formation ;

b. at least one fluid is recovered from said subterranean formation, the recovered fluid comprising oil, water and a part of said injected polymer; and

c. the oil and the water of the recovered fluid is separated by means of the method according to one of the claims 8 to 15.

Fig. 1

# Fig. 2A

Fig. 2B

Fig. 3A

Fig. 3B

☐ Near-wall
vortex structures

⬛ High-speed
velocity streaks

▨ Low-speed
velocity streaks

Oil
outlet

M₂

0

axisymmetric axis

z

P4 ←

← P3

R_ex2

Meridional plane

CR

P1

P2

Water outlet

r

M₂

M₁

R_in

Inlet

## Fig. 4

18

2

18

18

## Figure 5

31

32

33

34

35

36

3

## Fig. 6

Figure 7

**EP 3 669 959 A1**

Europäisches
Patentamt

European
Patent Office

Office européen
des brevets

## EUROPEAN SEARCH REPORT

Application Number

EP 18 30 6793

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/124437 A1 (BACHMAN JAN [SE] ET AL) 8 May 2014 (2014-05-08) * paragraphs [0013] - [0055]; figures 1-3 * | 1-16 | INV. B01D17/02 B01D17/06 B04C5/04 B04C5/103 |
| X | WO 2017/123095 A1 (STATOIL PETROLEUM AS [NO]) 20 July 2017 (2017-07-20) * page 10, line 1 - page 28, line 16; figure 3 * | 1-16 | B04C5/107 |
| X | US 2 829 771 A (DAHLSTROM DONALD A) 8 April 1958 (1958-04-08) * column 3, line 75 - column 9, line 56; figure 4 * | 1-16 | |

TECHNICAL FIELDS
SEARCHED      (IPC)

B01D
B04C

The present search report has been drawn up for all claims

| Place of search | Date of completion of the search | Examiner |
|---|---|---|
| The Hague | 9 May 2019 | Thibault, Valerie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 6793

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2019

| Patent document cited in search report | | Publication date | Patent family member(s) | | Publication date |
|---|---|---|---|---|---|
| US 2014124437 | A1 | 08-05-2014 | CA | 2836184 A1 | 08-11-2012 |
| | | | CN | 103648656 A | 19-03-2014 |
| | | | EP | 2704842 A1 | 12-03-2014 |
| | | | ES | 2635420 T3 | 03-10-2017 |
| | | | FI | 126232 B | 31-08-2016 |
| | | | SE | 1150397 A1 | 06-11-2012 |
| | | | US | 2014124437 A1 | 08-05-2014 |
| | | | WO | 2012150901 A1 | 08-11-2012 |
| WO 2017123095 | A1 | 20-07-2017 | NONE | | |
| US 2829771 | A | 08-04-1958 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHENG, F. ; QUIROGA, P. ; SAMS, G. W. ; CAMERON.** Challenges in Processing Produced Emulsion From Chemical Enhanced Oil Recovery - Polymer Flood Using Polyacrylamide. *Spe Enhanced Oil Recovery Conference [Eorc,* 2011, 201149
- *Chemical Engineering and Technology,* vol. 32 (12), 1885-1893

- **WANG, Z. ; L. ZHAO ; F. LI ; J. HE ; L. C.** Characteristics Study of Hydrocyclone Used for Separating Polymer-Flood Produced-Water. *International Offshore and Polar Engineering Conference,* 1999, vol. I